# EUROPÄISCHE PATENTSCHRIFT

(11) **EP 2 977 267 B1**
(45) Veröffentlichungstag und Bekanntmachung des Hinweises auf die Patenterteilung: **19.09.2018**
(21) Anmeldenummer: 15175191.4
(22) Anmeldetag: 03.07.2015
(51) Int. Cl.: B60R 9/045, B60R 9/048

(54) **LASTTRÄGER FÜR KRAFTFAHRZEUGE, INSBESONDERE IN FORM EINES DACHTRÄGERS**
LOAD CARRIER FOR MOTOR VEHICLES, IN PARTICULAR IN THE FORM OF A ROOF RACK
PORTE-CHARGE POUR VEHICULES UTILITAIRES, EN PARTICULIER SOUS FORME D'UNE GALERIE

(30) Priorität: 22.07.2014 DE 102014214199
(43) Veröffentlichungstag der Anmeldung: 27.01.2016
(73) Patentinhaber: Ford Global Technologies, LLC, Dearborn, MI 48126 (US)
(72) Erfinder: Baldsiefen, Lothar, 50769 Köln (DE); Valter, Dino, 52355 Düren (DE); Huth, Rene, 53797 Lohmar (DE)
(74) Vertreter: Dörfler, Thomas

(56) Entgegenhaltungen:
- FR-A- 1 268 891
- JP-A- H11 170 919
- US-A- 4 358 037
- US-A- 5 076 479

## Beschreibung

Die Erfindung betrifft einen Lastträger für Kraftfahrzeuge, insbesondere in Form eines Dachträgers, bestehend aus mindestens zwei in Längsrichtung des Kraftfahrzeugs im Abstand zueinander versetzt angeordneten Trägerbrücken, die je eine Querstange sowie beidseitig am Fahrzeug montierbare Befestigungsfüße aufweisen, wobei an den Querstangen als seitliche Lastanschläge dienende Winkelstützen vorgesehen sind, die zwischen einer aktiven und einer inaktiven Stellung hin- und herschwenkbar sind und in ihrer aktiven Stellung in vertikaler Position gegen einen Anschlag anlegbar sind, die Winkelstützen zwei die Querstangen übergreifende Befestigungsschenkel aufweisen, die Befestigungsschenkel Ausnehmungen aufweisen, die mit einer an der jeweiligen Querstange vorgesehene Schwenkachse ein Drehgelenk bildend, zusammenwirken, und die Winkelstützen in ihrer inaktiven Stellung auf die jeweilige Querstange herunterklappbar sind und dann auf dieser aufliegen.

Bei einem bekannten Lastträger der genannten Art (US 5,076,479 A) sind die Winkelstützen schwenkbar an den Querstangen der Trägerbrücken befestigt. Die Winkelstützen können dabei aus einer horizontalen inaktiven Stellung in eine vertikale aktive Stellung geschwenkt werden. Um die Winkelstützen in ihrer vertikalen aktiven Stellung zu halten, sind in einem Abstand von der jeweiligen Schwenkachse Durchgangsbohrungen durch die Winkelstützen und die Querstange vorgesehen, die in der entsprechenden Position zueinander fluchten und durch die ein Arretierstift gesteckt werden kann. Die Arretierstifte sind als gesonderte Teile vorgesehen, die von außen durch die in der aktiven Stellung der Winkelstützen zueinander fluchtenden Bohrungen gesteckt werden. Ein solcher Mechanismus setzt voraus, dass die notwendigen Arretierstifte vorhanden sind und diese dann in einem gesonderten Arbeitsgang durch die zueinander fluchtenden Bohrungen gesteckt werden müssen.

Bei einem anderen Lastträger der genannten Art (FR 2 989 338 A1) sind die Winkelstützen oben auf den Querstangen schwenkbar angeordnet und müssen in ihrer aktiven und inaktiven Stellung jeweils durch eine U-förmige Klammer fixiert werden, die jeweils durch zueinander fluchtende Bohrungen gesteckt wird. Auch bei dieser Konstruktion stellt die U-förmige Klammer ein gesondertes Bauteil dar, welches in einem speziellen Arbeitsgang jeweils die aktive bzw. inaktive Position der Winkelstütze fixiert.

Ferner ist ein Dachträger bekannt (FR 1.268.891), der einstückig ausgebildet ist und mittels Saugnäpfen auf einem PKW-Dach befestigt werden kann. Der Dachträger besteht aus zwei Längsholmen, zwischen denen in kurzen Abständen mehrere hintereinander angeordnete Querstangen befestigt sind. An den Querstangen können Winkelstützen in verschiedenen Positionen angebracht werden. Zur Befestigung der Winkelstützen an den Querstangen dienen Klemmringe, die um die jeweilige Querstange herum festgelegt werden. Die Winkelstützen weisen seitliche Befestigungsschenkel auf, die schwenkbar an den Klemmringen befestigt sind. Dadurch können die Winkelstützen aus einer inaktiven Stellung, in der sie auf die jeweilige Querstange heruntergeklappt sind und auf dieser aufliegen, in eine aktive Stellung geschwenkt werden, in der sie in vertikaler Position gegen einen Anschlag anlegbar sind. Als Anschlag dient dabei die den Befestigungsschenkeln zugewandte Endkante der jeweiligen Winkelstütze, die in der vertikalen Position auf der jeweiligen Querstange zur Anlage kommt. Eine Sicherung der Winkelstützen in der aktiven und inaktiven Position ist dabei nicht vorgesehen.

Der Erfindung liegt daher die Aufgabe zugrunde, einen Lastträger zu schaffen, bei dem die Möglichkeit vorhanden ist, die Winkelstützen in ihrer aktiven und inaktiven Position ohne zusätzliche Bauteile schnell und zuverlässig zu fixieren.

Erfindungsgemäß wird diese Aufgabe dadurch gelöst, dass als Schwenkachse für die Befestigungsschenkel ein in der jeweiligen Querstange angeordneter und in dieser befestigbarer Querstift vorgesehen ist, dass der Querstift über die Vorder- und Rückseite der jeweiligen Querstange vorsteht, dass die vorstehenden Abschnitte des Querstiftes in entsprechende Ausnehmungen der Befestigungsschenkel der Winkelstützen, ein Drehgelenk bildend, eingreifen, dass die Ausnehmungen der Befestigungsschenkel als Gleitschlitze in Form von Langlöchern ausgebildet sind, die sich geradlinig in Längsrichtung der Winkelstützen erstrecken und gemeinsam mit der Schwenkachse ein Drehgelenk bilden, dass an der jeweiligen Querstange unterhalb der Schwenkachse eine Stabilisierungsachse angeordnet ist, die in ein zweites in dem jeweiligen Befestigungsschenkel ausgebildetes Langloch eingreift, welches fluchtend zu dem Gleitschlitz verläuft und mindestens die gleiche Länge wie dieser aufweist, und dass von dem unteren Ende des zweiten Langlochs ein kreisbogenförmiges Langloch von gleicher Breite ausgeht, welches sich über einen Kreisbogen von mindestens 90° in Richtung auf die inaktive Stellung der jeweiligen Winkelstütze erstreckt.

Mit dieser erfindungsgemäßen Lösung können die Winkelstützen ohne zusätzliche Bauteile in ihrer aktiven und inaktiven Stellung fixiert werden. In ihrer aktiven Stellung sind die Winkelstützen dadurch fixiert, dass die Schwenkachse und die Stabilisierungsachse in die entsprechenden Gleitschlitze bzw. Langlöcher eingreifen, sodass die Schwenkbewegung der Winkelstützen gesperrt ist. Um die Winkelstützen aus der aktiven in die inaktive Stellung bewegen zu können, müssen die Winkelstützen lediglich ein Stück nach oben gezogen werden, bis sie an den unteren Enden der Gleitschlitze bzw. Langlöcher zur Anlage kommen, und können dann um 90° in die inaktive Stellung geschwenkt werden, wobei das kreisbogenförmige Langloch über die Stabilisierungsachse gleitet. Im umgekehrten Fall, wenn die Winkelstützen aus ihrer inaktiven Stellung in die aktive Stellung geschwenkt werden sollen, gleitet wiederum das kreisbogenförmige Langloch auf der Stabilisierungsachse, bis das Ende des kreisbogenförmigen Langlochs erreicht ist. Die Winkelstütze braucht dann lediglich ein Stück nach unten verschoben zu werden, bis die Schwenkachse sowie die Stabilisierungsachse an den jeweiligen Enden der Langlöcher zur Anlage kommen.

Im Zusammenhang mit Querstangen, die mit im Wesentlichen vertikal verlaufenden Vorder- und Rückseiten versehen sind, können die Winkelstützen so ausgebildet sein, dass sie einen etwa U-förmigen Querschnitt mit einem Quersteg und sich an diesen anschließenden U-Schenkeln aufweisen und dass die U-Schenkel in der inaktiven Stellung der Winkelstützen die Vorder- und Rückseiten der Querstangen bündig übergreifen, während der Quersteg auf der Oberseite der jeweiligen Querstange aufliegt. Bei einer solchen Ausführung schmiegen sich die Winkelstützen eng an den Umriss der Querstangen an und stehen lediglich mit ihrer Blechstärke über den äußeren Umriss der Querstangen vor.

Als Anschlag für die jeweilige Winkelstütze kann die den Befestigungsschenkeln zugewandte Endkante des Querstegs dienen, welche in der aktiven Stellung der jeweiligen Winkelstütze gegen die Oberseite der jeweiligen Querstange anliegt. Diese Endkante, die im Querschnitt der Winkelstützen vorgesehen ist, ergibt sich automatisch beim Freischneiden der Befestigungsschenkel, sodass dadurch ein zusätzlicher mechanischer Halt der Winkelstützen in ihrer aktiven Stellung gegeben ist.

Um eine optimale Stabilität der Winkelstützen in jeder Betriebsstellung zu erreichen, sind die Langlöcher bzw. Gleitschlitze zweckmäßig in beiden Befestigungsschenkeln der Winkelstützen vorgesehen.

Alternativ können als Schwenkachse für die Befestigungsschenkel auch beidseitig in die jeweilige Querstange eingesetzte Drehstifte vorgesehen sein, die über die Vorder- und Rückseite der jeweiligen Querstange vorstehen, wobei die vorstehenden Abschnitte der Drehstifte in die entsprechenden Ausnehmungen der Befestigungsschenkel der Winkelstützen, ein Drehgelenk bildend, eingreifen. Die Drehstifte können dabei seitlich von außen in die jeweilige Querstange eingeschraubt werden, sodass die Montage dadurch besonders vereinfacht wird.

Um die Winkelstützen auch bei dieser Ausführungsform an verschiedenen Stellen der Querstangen anbringen zu können, weist jede Querstange über ihre Länge verteilt mehrere Schwenk- und Stabilisierungsachsen auf, sodass die Winkelstützen in Anpassung an den jeweiligen Anwendungsfall an den entsprechenden Stellen der Querstangen anlenkbar sind.

Die Erfindung ist in der Zeichnung beispielhaft veranschaulicht und im Nachstehenden im Einzelnen anhand der Zeichnung beschrieben. Es zeigen:
- Fig. 1:: einen Ausschnitt aus einer bevorzugten Ausführungsform der Erfindung, bei der eine Winkelstütze in ihrer aktiven Stellung gezeigt ist,
- Fig. 2:: die in Fig. 1 dargestellte Ausführungsform in verkleinertem Maßstab in perspektivischer Darstellung,
- Fig. 3:: die gleiche Ansicht wie in Fig. 1, bei der die Winkelstütze ihre inaktive Stellung einnimmt,
- Fig. 4:: eine Winkelstütze gemäß den Ausführungsformen in Fig. 1 bis 3,
- Fig. 5:: einen Schnitt entlang der Linie V-V aus Fig. 4,
- Fig. 6:: eine ähnliche Darstellung wie in Fig. 1 einer zweiten Ausführungsform der Erfindung und
- Fig. 7:: eine Darstellung einer weiteren Ausführungsform der Erfindung.

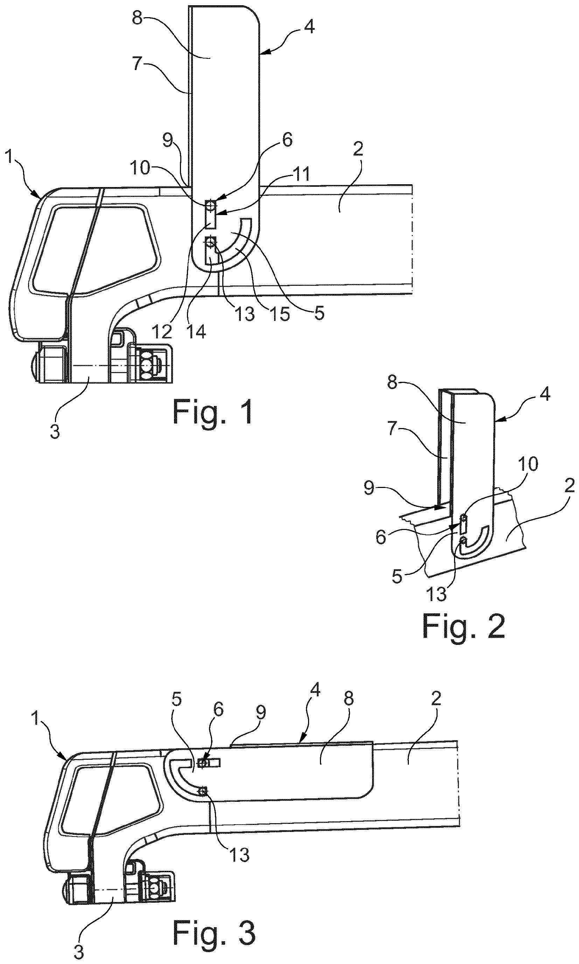

Die Erfindung ist anhand eines bevorzugten Ausführungsbeispiels der Erfindung, wie sie in Fig. 1 bis 5 dargestellt ist, beschrieben.

Gemäß Fig. 1 und 3 besteht der erfindungsgemäße Lastträger, der insbesondere als Dachträger für Personenkraftwagen vorgesehen ist, aus mindestens zwei im Abstand zueinander versetzt angeordneten Trägerbrücken 1, von denen in der Zeichnung nur die linke Hälfte einer einzelnen Trägerbrücke dargestellt ist.

Die Trägerbrücke 1 besteht aus einer Querstange 2 sowie beidseitig am Fahrzeug montierbaren Befestigungsfüßen 3. An der Querstange 2 sind zur Sicherung der zu transportierenden Gegenstände mindestens zwei Winkelstützen 4 vorgesehen, von denen in der Zeichnung nur die linke Winkelstütze dargestellt ist. An der rechten Seite der Querstange 2 ist eine in der Zeichnung nicht dargestellte weitere Winkelstütze angeordnet, die zum Erreichen ihrer aktiven Stellung in die entgegengesetzte Richtung geklappt wird. Zwischen diesen beiden Winkelstützen soll die zu transportierende Last befestigt werden.

Die Winkelstützen 4 weisen zwei die jeweilige Querstange 2 übergreifende Befestigungsschenkel 5 auf, die um eine gemeinsame, an der jeweiligen Querstange 2 vorgesehene Schwenkachse 6 schwenkbar sind.

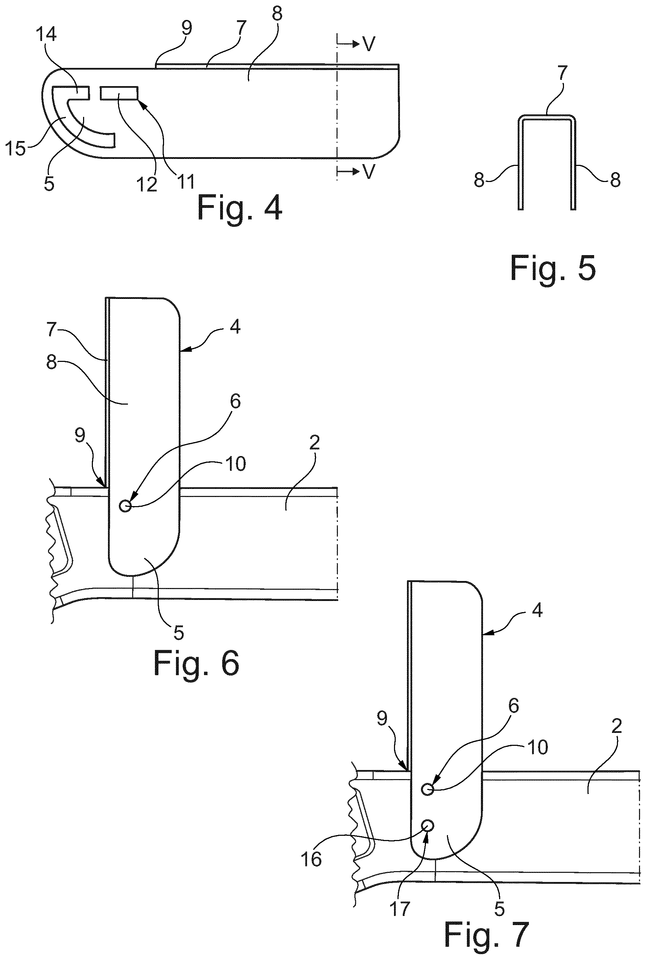

Bei dem in der Zeichnung dargestellten Ausführungsbeispiel weisen die Querstangen 2 einen im Wesentlichen rechteckigen Querschnitt auf, bei dem die Vorder- und Rückseiten der Querstangen 2 etwa vertikal angeordnet sind. Für ein solches Profil der Querstange 2 sind die Winkelstützen, wie in Fig. 4 und 5 dargestellt, mit einem U-förmigen Querschnitt ausgestattet, der durch einen Quersteg 7 sowie sich an diesen anschließende U-Schenkel 8 gebildet ist. Die Winkelstützen bestehen dabei im Wesentlichen aus gebogenem Blechmaterial, welches aufgrund des U-förmigen Querschnitts äußerst stabil ist und dem zu transportierenden Material einen guten Halt bietet.

Im Bereich der Befestigungsschenkel 5 ist der Quersteg 7 des Profils weggeschnitten. Somit entsteht auf der den Befestigungsschenkeln 5 zugewandten Seite des U-Profils eine Endkante 9, die in der aktiven Stellung der jeweiligen Winkelstütze gegen die Oberseite der Querstange 2 anliegt. Diese Endkante 9 bildet somit in Zusammenwirkung mit der Oberseite der Querstange 2 einen Anschlag, der die Bewegung der Winkelstütze 4 in die aktive Stellung, in der sie eine vertikale Position einnimmt, begrenzt.

Wenn die Winkelstütze 4 in ihre inaktive Stellung geschwenkt wird, so übergreifen die U-Schenkel die Vorder- und Rückseiten der jeweiligen Querstange 2 bündig, während der Quersteg 7 auf der Oberseite der jeweiligen Querstange 2 aufliegt. In dieser inaktiven Position ragen die Winkelstützen 4 nur um die Materialstärke des Querstegs 7 über die Oberseite der Querstangen 2 hinaus, sodass sie während der Fahrt nur einen vernachlässigbar geringen zusätzlichen Luftwiderstand bieten.

Als Schwenkachsen 6 für die Befestigungsschenkel 5 dienen, wie in Fig. 1 und 2 dargestellt, Querstifte 10, die durch das gesamte Profil der Querstangen 2 hindurch gehen. Alternativ können die Querstifte 10 auch geteilt sein, sodass jeder Querstift aus zwei kurzen Drehstiften besteht, die von beiden Seiten in die Querstangen 2 eingesteckt bzw. eingeschraubt werden.

Die über die Vorder- und Rückseite der jeweiligen Querstange 2 vorstehenden Abschnitte der Querstifte bzw. der Drehstifte greifen in entsprechende Ausnehmungen 11 der Befestigungsschenkel 5 ein, sodass dadurch Drehgelenke entstehen, um die die Winkelstützen 4 geschwenkt werden können.

Bei dem in Fig. 1 bis 3 dargestellten Ausführungsbeispiel sind die Ausnehmungen 11 der Befestigungsschenkel 5 als Gleitschlitze 12 in Form von Langlöchern ausgebildet, die sich in Längsrichtung der Winkelstützen 5 erstrecken und gemeinsam mit dem die jeweilige Schwenkachse 6 bildenden Querstift 10 ein Drehgelenk darstellen.

An der jeweiligen Querstange 2 ist unterhalb der Schwenkachse 6 zusätzlich noch eine Stabilisierungsachse 13 angeordnet, die in ein zweites, gleich langes Langloch 14 eingreift, welches fluchtend zu dem Gleitschlitz 12 verläuft.

Vom unteren Ende des zweiten Langlochs 14 geht ein kreisbogenförmiges Langloch 15 aus, welches die gleiche Breite wie das Langloch 14 aufweist. Dieses kreisbogenförmige Langloch 15 erstreckt sich über einen Kreisbogen von ca. 90° in Richtung auf die inaktive Stellung der jeweiligen Winkelstütze 4.

Wenn die Winkelstütze 4 aus der in Fig. 3 dargestellten inaktiven Stellung in die in Fig. 1 dargestellte aktive Stellung geschwenkt werden soll, so gleitet das kreisförmige Langloch 15 auf der Stabilisierungsachse 13 so weit, bis diese an der Seitenwand des Langlochs 14 zur Anlage kommt. In dieser Position hat die Winkelstütze 4 bereits ihre vertikale Position erreicht. Danach wird die Winkelstütze 4 durch einen leichten Druck von Hand abgesenkt, sodass sie die in Fig. 1 dargestellte aktive Stellung einnimmt. In dieser Lage ist die Winkelstütze 4 dreifach gesichert, und zwar erstens durch die als Anschlag dienende Endkante 9 des Querstegs 7, die dann auf der Oberseite der Querstange 2 aufliegt, zweitens durch den in dem Gleitschlitz 12 befindlichen Querstift 10 und drittens durch die in das zweite Langloch 14 eingreifende Stabilisierungsachse 13. Dadurch wird ein besonders fester Sitz der Winkelstütze 4 relativ zu der Querstange 2 gewährleistet.

Wenn die Winkelstütze 4 anschließend wieder in ihre inaktive Stellung geschwenkt werden soll, braucht sie lediglich von Hand etwas nach oben gezogen zu werden, sodass die unteren Enden der Langlöcher 12 und 14 an den Achsen 6 und 13 zur Anlage kommen, und dann kann die Winkelstütze 4 in der Zeichnung nach rechts in die in Fig. 3 dargestellte inaktive Position zurückgeschwenkt werden.

Bei der in Fig. 6 dargestellten vereinfachten Ausführungsform der Erfindung ist die jeweilige Winkelstütze 4 ebenfalls zwischen einer inaktiven und aktiven Stellung schwenkbar. In der aktiven Stellung ist die Schwenkbewegung der Winkelstützen 4 nach außen in gleicher Weise wie bei dem Ausführungsbeispiel gemäß Fig. 1 bis 3 dadurch begrenzt, dass die Endkante 9 des Querstegs 7 gegen die Oberseite der Querstange 2 zur Anlage kommt. Allerdings ist keine Sicherung aus der aktiven Stellung in die inaktive Stellung vorgesehen, zumal eine solche Sicherung bei verschiedenen Anwendungsfällen auch nicht benötigt wird. Eine gewisse Schwergängigkeit könnte diesen Mangel beseitigen.

Sollte dennoch bei dieser vereinfachten Ausführungsform eine stabile Sicherung der Winkelstütze 4 in Richtung auf die inaktive Stellung erforderlich sein, so können gemäß Fig. 7 die Befestigungsschenkel auf mindestens einer Seite eine zusätzliche Ausnehmung 16 aufweisen, in die ein in der Querstange 2 vorgesehener federbelasteter Sicherungsstift 17 einrastet, sobald die Winkelstütze 4 ihre aktive Stellung erreicht hat.

Um die Winkelstütze 4, wenn sie nicht mehr benötigt wird, in ihre inaktive Stellung zurückzuschwenken, braucht lediglich der Sicherungsstift 17 niedergedrückt zu werden, sodass eine Verschwenkung der Winkelstütze 4 möglich ist.

Auch bei dieser vereinfachten Ausführungsform ist somit eine Sicherung der Winkelstützen in beiden Schwenkrichtungen möglich, und zwar einerseits durch die Anlage der Endkante 9 des Querstegs 7 gegen die Oberseite der Querstange 2 und andererseits durch den zusätzlichen Sicherungsstift 17, der in die Ausnehmung 16 einrastet.

### Bezugszeichenliste

- 1: Trägerbrücken
- 2: Querstangen
- 3: Befestigungsfüße
- 4: Winkelstützen
- 5: Befestigungsschenkel
- 6: Schwenkachse
- 7: Quersteg
- 8: U-Schenkel
- 9: Endkante
- 10: Querstift
- 11: Ausnehmungen
- 12: Gleitschlitz / Langloch
- 13: Stabilisierungsachse
- 14: Langloch
- 15: kreisbogenförmiges Langloch
- 16: zusätzliche Ausnehmung
- 17: Sicherungsstift

## Patentansprüche

1. Lastträger für Kraftfahrzeuge, insbesondere in Form eines Dachträgers, bestehend aus mindestens zwei in Längsrichtung des Fahrzeugs im Abstand zueinander versetzt angeordneten Trägerbrücken (1), die je eine Querstange (2) sowie beidseitig am Fahrzeug montierbare Befestigungsfüße (3) aufweisen, wobei
- an den Querstangen (2) als seitliche Lastanschläge dienende Winkelstützen (4) vorgesehen sind, die zwischen einer aktiven und einer inaktiven Stellung hin- und herschwenkbar sind und in ihrer aktiven Stellung in vertikaler Position gegen einen Anschlag anlegbar sind,
- die Winkelstützen (4) zwei die Querstangen (2) übergreifende Befestigungsschenkel (5) aufweisen,
- die Befestigungsschenkel (5) Ausnehmungen (11) aufweisen, die mit einer an der jeweiligen Querstange (2) vorgesehene Schwenkachse (6) ein Drehgelenk bildend, zusammenwirken, und
- die Winkelstützen (4) in ihrer inaktiven Stellung auf die jeweilige Querstange (2) herunterklappbar sind und dann auf dieser aufliegen,
**dadurch gekennzeichnet,**
- **dass** als Schwenkachse (6) für die Befestigungsschenkel (5) ein in der jeweiligen Querstange (2) angeordneter und in dieser befestigbarer Querstift (10) vorgesehen ist,
- **dass** der Querstift (10) über die Vorder- und Rückseite der jeweiligen Querstange (2) vorsteht,
- **dass** die vorstehenden Abschnitte des Querstiftes (10) in die entsprechenden Ausnehmungen (11) der Befestigungsschenkel (5) der Winkelstützen (4), ein Drehgelenk bildend, eingreifen,
- **dass** die Ausnehmungen (11) der Befestigungsschenkel (5) als Gleitschlitze (12) in Form von Langlöchern ausgebildet sind, die sich geradlinig in Längsrichtung der Winkelstützen (4) erstrecken und gemeinsam mit der Schwenkachse (6) ein Drehgelenk bilden,
- **dass** an der jeweiligen Querstange (2) unterhalb der Schwenkachse (6) eine Stabilisierungsachse (13) angeordnet ist, die in ein zweites in dem jeweiligen Befestigungsschenkel (15) ausgebildetes Langloch (14) eingreift, welches fluchtend zu dem Gleitschlitz (12) verläuft und mindestens die gleiche Länge wie dieser aufweist, und
- **dass** von dem unteren Ende des zweiten Langlochs (14) ein kreisbogenförmiges Langloch (15) von gleicher Breite ausgeht, welches sich über einen Kreisbogen von mindestens 90° in Richtung auf die inaktive Stellung der jeweiligen Winkelstütze (4) erstreckt.

2. Lastträger nach Anspruch 1, wobei die Querstangen (2) mit im Wesentlichen vertikal verlaufenden Vorder- und Rückseiten versehen sind,
**dadurch gekennzeichnet,**
- **dass** die Winkelstützen (4) einen etwa U-förmigen Querschnitt mit einem Quersteg (7) und sich an diesen anschließenden U-Schenkeln (8) aufweisen und
- **dass** die U-Schenkel (8) in der inaktiven Stellung der Winkelstützen (4) die Vorder- und Rückseiten der Querstangen (2) bündig übergreifen, während der Quersteg (7) auf der Oberseite der jeweiligen Querstange (2) aufliegt.

3. Lastträger nach Anspruch 2,
**dadurch gekennzeichnet,**
**dass** als Anschlag für die jeweilige Winkelstütze (4) die den Befestigungsschenkeln (5) zugewandte Endkante (9) des Querstegs (7) dient, welche in der aktiven Stellung der jeweiligen Winkelstütze (4) gegen die Oberseite der jeweiligen Querstange (2) anliegt.

4. Lastträger nach einem der Ansprüche 1 bis 3,
**dadurch gekennzeichnet,**
**dass** die Langlöcher bzw. Gleitschlitze (12, 14, 15) in beiden Befestigungsschenkeln (5) der Winkelstützen (4) vorgesehen sind.

5. Lastträger nach einem der vorhergehenden Ansprüche,
**dadurch gekennzeichnet,**
- **dass** als Schwenkachse (6) für die Befestigungsschenkel (5) beidseitig in die jeweilige Querstange (2) eingesetzte Drehstifte vorgesehen sind,
- **dass** die Drehstifte im eingebauten Zustand über die Vorder- und Rückseite der jeweiligen Querstange (2) vorstehen und
- **dass** die vorstehenden Abschnitte der Drehstifte in die entsprechenden Ausnehmungen (11) der Befestigungsschenkel (5) der Winkelstützen (4), ein Drehgelenk bildend, eingreifen.

6. Lastträger nach Anspruch 5,
**dadurch gekennzeichnet,**
**dass** die Drehstifte seitlich von außen in die jeweilige Querstange (1) eingeschraubt sind.

7. Lastträger nach einem der vorhergehenden Ansprüche,
**dadurch gekennzeichnet,**
**dass** über die Länge der jeweiligen Querstange (2) verteilt mehrere Schwenkachsen und Stabilisierungsachsen (13) vorgesehen sind, sodass die Winkelstützen (4) an verschiedenen Stellen der jeweiligen Querstange (2) anlenkbar sind.

## Claims

1. Load carrier for motor vehicles, in particular in the form of a roof rack, consisting of at least two carrier bridges (1) arranged offset at a distance from one another in the longitudinal direction of the vehicle, said carrier bridges in each case comprising a crossbar (2) as well as fastening feet (3) which are able to be mounted on both sides of the vehicle, wherein
- angle brackets (4) serving as lateral load stops are provided on the crossbars (2), said angle brackets being able to be pivoted to and fro between an active position and an inactive position and in their active position being able to be placed in the vertical position against a stop,
- the angle brackets (4) comprise two fastening limbs (5) encompassing the crossbars (2),
- the fastening limbs (5) comprise recesses (11) which interact with a pivot pin (6) provided on the respective crossbar (2), forming a rotary joint, and
- the angle brackets (4) are able to be folded down in their inactive position onto the respective crossbar (2) and then bear against said crossbar,
**characterized**
- **in that** a transverse pin (10) arranged in the respective crossbar (2) and able to be fastened therein is provided as a pivot pin (6) for the fastening limbs (5),
- **in that** the transverse pin (10) protrudes over the front and rear faces of the respective crossbar (2),
- **in that** the protruding portions of the transverse pin (10) engage in the corresponding recesses (11) of the fastening limbs (5) of the angle brackets (4), forming a rotary joint,
- **in that** the recesses (11) of the fastening limbs (5) are configured as sliding slots (12) in the form of elongated holes which extend rectilinearly in the longitudinal direction of the angle brackets (4) and together with the pivot pin (6) form a rotary joint,
- **in that** a stabilizing pin (13) is arranged on the respective crossbar (2) below the pivot pin (6), said stabilizing pin engaging in a second elongated hole (14) which is formed in the respective fastening limb (15), extends aligned with the sliding slot (12) and has at least the same length as said sliding slot, and
- **in that** from the lower end of the second elongated hole (14) extends a circular arc-shaped elongated hole (15) of the same width, said circular arc-shaped elongated hole extending over a circular arc of at least 90° in the direction of the inactive position of the respective angle bracket (4).

2. Load carrier according to Claim 1, wherein the crossbars (2) are provided with substantially vertically extending front and rear faces, **characterized**
- **in that** the angle brackets (4) have an approximately U-shaped cross section with a crossmember (7) and arms of the U-shape (8) adjacent thereto and
- **in that** the arms of the U-shape (8) in the inactive position of the angle brackets (4) encompass the front and rear faces of the crossbars (2), flush therewith, whilst the crossmember (7) bears against the upper face of the respective crossbar (2).

3. Load carrier according to Claim 2,
**characterized**
**in that** the end edge (9) of the crossmember (7) facing the fastening limbs (5) serves as a stop for the respective angle bracket (4), said end edge in the active position of the respective angle bracket (4) bearing against the upper face of the respective crossbar (2).

4. Load carrier according to one of Claims 1 to 3,
**characterized**
**in that** the elongated holes or sliding slots (12, 14, 15) are provided in both fastening limbs (5) of the angle brackets (4).

5. Load carrier according to one of the preceding claims,
**characterized**
- **in that** rotary pins inserted on both sides into the respective crossbar (2) are provided as a pivot pin (6) for the fastening limbs (5),
- **in that** the rotary pins in the installed state protrude over the front and rear faces of the respective crossbar (2), and
- **in that** the protruding portions of the rotary pins engage in the corresponding recesses (11) of the fastening limbs (5) of the angle brackets (4), forming a rotary joint.

6. Load carrier according to Claim 5,
**characterized**
**in that** the rotary pins are screwed laterally from the outside into the respective crossbar (1).

7. Load carrier according to one of the preceding claims,
**characterized**
**in that** a plurality of pivot pins and stabilizing pins (13) are provided, said pins being distributed over the length of the respective crossbar (2), so that the angle brackets (4) are able to be articulated at different points of the respective crossbar (2).

## Revendications

1. Porte-charge pour véhicules automobiles, se présentant en particulier sous la forme d'une galerie de toit, comprenant au moins deux ponts de support (1) qui sont disposés de manière décalée dans la direction longitudinale du véhicule à distance l'un de l'autre et qui comportent chacun une barre transversale (2) et des pieds de fixation (3) pouvant être montés des deux côtés sur le véhicule,
- des équerres de support (4) servant de butées de charge latérales étant prévues sur les barres transversales (2), lesquelles équerres de support peuvent pivoter suivant un mouvement alternatif entre une position active et une position inactive et peuvent être appliquées dans leur position active en position verticale contre une butée,
- les équerres de support (4) comportant deux branches de fixation (5) s'engageant par-dessus les barres transversales (2),
- les branches de fixation (5) comportant des évidements (11) qui coopèrent avec un axe de pivotement (6), prévu au niveau de la barre transversale respective (2), en formant une charnière et
- les équerres de support (4) pouvant être rabattues sur la barre transversale respective (2) dans leur position inactive puis être en appui sur celle-ci,
**caractérisé**
- **en ce que** il est prévu comme axe de pivotement (6) destiné aux branche de fixation (5) une tige transversale (10) disposée dans la barre transversale respective (2) et fixée dans celle-ci,
- **en ce que** la tige transversale (10) fait saillie du côté avant et du côté arrière de la barre transversale respective (2),
- **en ce que** les parties saillantes de la tige transversale (10) s'engagent dans les évidements correspondants (11) des branches de fixation (5) des équerres de support (4), en formant une charnière,
- **en ce que** les évidements (11) des branches de fixation (5) sont conçues sous la forme de fentes de coulissement (12) en forme de trous oblongs qui s'étendent de manière rectiligne dans la direction longitudinale des équerres de support (4) et forment conjointement avec l'axe de pivotement (6) une charnière,
- **en ce qu'**un axe de stabilisation (13) est disposé sous l'axe de pivotement (6) au niveau de la barre transversale respective (2), lequel axe de stabilisation s'engage dans un deuxième trou oblong (14), formé dans la branche de fixation respective (15), qui s'étend en alignement avec la fente de coulissement (12) et qui a au moins la même longueur que celle-ci, et
- **en ce qu'**un trou oblong incurvé (15) de même largeur égale part de l'extrémité inférieure du deuxième trou oblong (14) et s'étend sur un arc de cercle d'au moins 90° en direction de la position inactive de l'équerre de support respective (4).

2. Porte-charge selon la revendication 1, dans lequel les barres transversales (2) sont pourvues de côtés avant et arrière s'étendant sensiblement verticalement, **caractérisé**
- **en ce que** les équerres de support (4) ont une section transversale approximativement en forme d'un U qui comporte une nervure transversale (7) et des branches de U (8) se raccordant à celle-ci et
- **en ce que** les branches de U (8) s'engagent à fleur par-dessus les côtés avant et arrière des barres transversales (2) dans la position inactive des équerres de support (4), tandis que la nervure transversale (7) est en appui sur le côté supérieur de la barre transversale respective (2).

3. Porte-charge selon la revendication 2,
**caractérisé**
**en ce que** le bord d'extrémité (9), tourné vers les branches de fixation (5), de la barre transversale (7) est utilisé comme butée pour l'équerre de support respective (4) et vient en appui, dans la position active de l'équerre de support respective (4), contre le côté supérieur de la barre transversale respective (2) .

4. Porte-charge selon l'une des revendications 1 à 3,
**caractérisé**
**en ce que** les trous oblongs ou les fentes de coulissement (12, 14, 15) sont ménagés dans les deux branches de fixation (5) des équerres de support (4).

5. Porte-charge selon l'une des revendications précédentes,
**caractérisé**
- **en ce que** des tiges de rotation, utilisées des deux côtés dans la barre transversale respective (2), sont prévues comme axe de pivotement (6) pour les branches de fixation (5),
- **en ce que** les tiges de rotation font saillie, à l'état monté, au-dessus du côté avant et du côté arrière de la barre transversale respective (2) et
- **en ce que** les parties saillantes des tiges de rotation s'engagent dans les évidements correspondants (11) des branches de fixation (5) des équerres de support (4) en formant une charnière.

6. Porte-charge selon la revendication 5,
**caractérisé**
**en ce que** les tiges de rotation sont vissées latéralement de l'extérieur dans la barre transversale respective (1).

7. Porte-charge selon l'une des revendications précédentes,
**caractérisé**
**en ce qu'**il est prévu une pluralité d'axes de pivotement et d'axes de stabilisation (13) répartis sur la longueur de la barre transversale respective (2) de sorte que les équerres de support (4) peuvent s'articuler en différents points de la barre transversale respective (2).
